# FASCICULE DE BREVET EUROPEEN

(11) **EP 0 701 538 B1**
(45) Date de publication et mention de la délivrance du brevet: **07.07.1999**
(21) Numéro de dépôt: 95916709.9
(22) Date de dépôt: 05.04.1995
(51) Int. Cl.: C03C 1/00, C04B 41/86

(54) **PROCEDE POUR LA PROTECTION CONTRE L'OXYDATION D'UN MATERIAU POREUX CONTENANT DU CARBONE, ET MATERIAU OBTENU**
VERFAHREN ZUM SCHÜTZEN EINES PORÖSEN KOHLENSTOFFHALTIGEN MATERIAL UND DAS SO ERHALTENE MATERIAL
METHOD FOR PROTECTING A POROUS CARBON-CONTAINING MATERIAL FROM OXIDATION AND MATERIAL OBTAINED THEREBY

(30) Priorité: 05.04.1994 FR 9403971
(43) Date de publication de la demande: 20.03.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: DELAVAL, Rodolphe, F-62500 St.-Martin-au-Laert (FR); PALAVIT, Gérard, F-59500 Douai (FR); REY, Jacques, F-33700 Merignac (FR); LAXAGUE, Michel, F-33200 Bordeaux (FR); THEBAULT, Jacques, F-33200 Bordeaux (FR)
(74) Mandataire: Joly, Jean-Jacques
(86) Numéro de dépôt international: FR9500432
(87) Numéro de publication internationale: WO9526934

(56) Documents cités:
- EP-A- 0 365 235
- EP-A- 0 492 137
- EP-A- 0 507 463
- WO-A-93/12047
- WO-A-93/13033
- GB-A- 2 120 645
- JOURNAL OF NON-CRYSTALLINE SOLIDS, vol. 155, no. 2, Avril 1993 AMSTERDAM, pages 115-121, XP 000354424 L. MONTAGNE ET AL. 'Mechanism of polyphosphate gel formation in the Na2O-Al2O3-P2O5 system'
- CHEMICAL ABSTRACTS, vol. 91, no. 6, 6 Août 1979 Columbus, Ohio, US; abstract no. 43577q, S. HIROTA page 259; & JP,A,07 938 311 (JPN. KOKAI TOKKYO KOHO)
- PATENT ABSTRACTS OF JAPAN vol. 11 no. 315 (C-451) [2762] ,14 Octobre 1987 & JP,A,62 100457 (TOSHIBA MONOFURATSUKUSU K.K.) 9 Mai 1987,

## Description

La présente invention se rapporte à la protection de matériaux poreux contenant du carbone, contre l'oxydation et l'oxydation catalytique du carbone.

Le domaine d'application de l'invention est celui des matériaux poreux carbonés destinés à être utilisés à des températures supérieures à la température d'oxydation commençante du carbone c'est-à-dire environ 350°C, et allant notamment jusqu'à environ 1000°C.

Les matériaux visés sont les matériaux massifs, tels les carbones et les graphites poreux, ainsi que les matériaux composites contenant du carbone. Ces derniers sont notamment les matériaux composites constitués d'un renfort fibreux densifié par une matrice, dans lesquels le carbone est présent dans les fibres, dans la matrice, et/ou dans une couche d'adaptation ou interphase entre fibres et matrice. De tels matériaux composites sont en particulier les matériaux composites thermostructuraux dans lesquels le renfort fibreux et la matrice sont en carbone ou en céramique avec interposition éventuelle d'une interphase en carbone pyrolytique entre fibres et matrice. Ces matériaux sont caractérisés par leurs bonnes propriétés mécaniques. Lorsqu'ils contiennent du carbone, leur capacité à conserver ces propriétés à des températures élevées en milieu oxydant est conditionnée par la présence d'une protection anti-oxydation efficace. Il en est ainsi même lorsque le carbone n'est présent que dans une interphase en carbone pyrolytique entre renfort en fibres céramique et matrice céramique, la fonction de l'interphase au regard des propriétés mécaniques du matériau étant essentielle, comme décrit dans le document EP 0 172 082. Or, quel que soit le mode d'élaboration des matériaux composites thermostructuraux -densification par voie liquide consistant à imprégner le renfort fibreux par un précurseur et à transformer ensuite le précurseur par traitement thermique, ou densification par infiltration chimique en phase vapeur-, les matériaux obtenus présentent une porosité résiduelle ouverte offrant un accès au coeur du matériau pour l'oxygène du milieu ambiant.

Ainsi, un objet de l'invention est de réaliser une protection efficace contre l'oxydation pour des matériaux massifs ou des matériaux composites contenant du carbone et présentant une porosité interne accessible depuis l'extérieur.

Un autre objet de l'invention est de réaliser une protection efficace contre l'oxydation catalytique du carbone.

Il est bien connu que la réaction entre le carbone et l'oxygène peut être accélérée par la présence de certains éléments, tels que les alcalins et les alcalino-terreux, introduits par ou provenant de, par exemple, le chlorure de sodium (eau de mer), l'acétate de potassium ... agissant en tant que catalyseurs d'oxydation. Ces catalyseurs peuvent être des impuretés amenées par le milieu environnant (pollution, encrassage, exposition au milieu marin, ...) ou des impuretés provenant d'un processus de fabrication, par exemple des résidus issus de la fabrication de fibres carbone (précurseurs, produits d'ensimage ajoutés en vue du tissage...).

Un procédé bien connu pour protéger un matériau contenant du carbone contre l'oxydation consiste à former un revêtement constituant une barrière vis-à-vis de l'oxygène du milieu ambiant. Lorsque le matériau est utilisé à une température relativement élevée et/ou est soumis à des sollicitations importantes, il est nécessaire d'éviter que des fissures ou défauts de la barrière de protection dus à des dilatations thermiques différentielles ou à des contraintes mécaniques constituent des voies d'accès pour l'oxygène. Aussi, il est fait appel à des protections anti-oxydation qui sont en elles-mêmes autocicatrisantes ou qui sont complétées par une couche de revêtement additionnelle ayant une telle propriété. Par autocicatrisation, on entend ici la faculté de combler automatiquement toute fissure ou défaut susceptible d'apparaître lors de l'utilisation du matériau.

Les revêtements sous forme de verres sont utilisés pour constituer des protections autocicatrisantes pour des matériaux destinés à être utilisés à des températures relativement élevées. En effet, par leur passage à l'état visqueux aux températures d'utilisation des matériaux à protéger, les verres sont à même de combler d'éventuelles fissures. La composition du verre est choisie pour que celui-ci présente le caractère visqueux souhaité à la température d'utilisation prévue. Une revue de différents types de verres pouvant convenir selon la température d'utilisation fait l'objet de la publication intitulée "Ceramic Coatings for carbon materials" par James E. Sheehan dans "Proceedings of the Fourth Annual Conference on Materials Technology" 5 mai 1987.

Dans le domaine visé par la présente invention, c'est-à-dire pour des températures allant au maximum jusqu'à 1000°C, ce sont des verres à bas point de fusion qui sont susceptibles de convenir, c'est-à-dire des verres dont la température de transition vitreuse Tg est au plus égale à 500°C. Elle peut être relativement basse, de 250°C à 350°C, lorsqu'une protection anti-oxydation efficace est recherchée dès la température d'oxydation commençante du carbone. Elle peut être légèrement supérieure, par exemple environ 450 à 500°C, selon la plage de température d'utilisation du matériau, et lorsque l'absence de la fonction d'autocicatrisation entre 350°C et 450 à 500°C est tolérable du fait que la cinétique d'oxydation du carbone est encore assez faible. La plage d'efficacité du verre, c'est-à-dire la plage dans laquelle il assure efficacement la fonction d'autocicatrisation étant d'environ 500°C, une valeur Tg de 250 à 350°C permet d'offrir une protection jusqu'à 750 à 850°C environ, tandis qu'une valeur Tg de 450 à 500°C offre une protection jusqu'à 950 à 1000°C environ. Parmi les verres à bas point de fusion, ceux à base phosphate paraissent particulièrement bien adaptés, c'est-à-dire ceux dans lesquels l'oxyde formateur principal du verre est P₂O₅. En plus, de façon bien connue en soi, les phosphates vitreux ou non ont en outre une activité anti-catalyse vis-à-vis de l'oxydation catalytique du carbone. Cest-à-dire que les phosphates peuvent inhiber l'effet d'agents catalytiques présents au contact du matériau à protéger pour ramener la cinétique d'oxydation à celle du carbone pur. Par conséquent, les verres à base phosphate sont capables d'assurer à la fois la fonction de barrière de protection autocicatrisante et la fonction anti-catalyseur.

Dans le cas de matériaux poreux, une protection anti-oxydation efficace est obtenue lorsque la barrière de protection est ancrée au sein de la porosité interne des matériaux, c'est-à-dire tapisse les parois des pores accessibles depuis l'extérieur (surface réelle du matériau), et ne constitue pas simplement une couche de revêtement de surface externe.

La réalisation d'une protection anti-oxydation interne dans des matériaux poreux contenant du carbone, par imprégnation des matériaux avec des compositions susceptibles de laisser un revêtement à base phosphate sur les parois des pores accessibles depuis l'extérieur est décrite en particulier dans les documents US-A-3 351 477, US-A-4 292 345 et FR-A-2 685 694.

Le document US-A-3351477 décrit l'utilisation d'une composition d'imprégnation constituée d'une solution aqueuse relativement concentrée, avec stipulation d'un ordre particulier d'introduction de précurseurs du revêtement phosphate à obtenir. Ainsi, la mise en solution des précurseurs débute avec l'acide phosphorique dont la présence permet la dissolution des autres précurseurs, mais de façon limitée. Il en résulte la formation d'un revêtement phosphate sensible à l'humidité. De plus, lors du traitement thermique de transformation des précurseurs, l'acide phosphorique a tendance à se volatiliser, et il est difficile de fixer la composition finale et, par conséquent, les propriétés du revêtement phosphate obtenu.

Le document US-A-4 292345 décrit une imprégnation en plusieurs étapes, d'abord avec de l'acide orthophosphorique, qui est séché, puis avec une solution d'un composé organique capable, après élévation de la température, de réagir avec l'acide phosphorique pour former des phosphates. Outre le fait que deux imprégnations successives au moins sont nécessaires, suivies par un traitement thermique, on retrouve l'inconvénient évoqué plus haut de la sensibilité à l'humidité du revêtement phosphate obtenu.

Quant au document FR-A-2685694, il décrit l'imprégnation d'un matériau composite par une solution liquide de phosphates de sodium et de potassium, avant séchage et traitement thermique pour former une protection interne anti-oxydation qui nappe les surfaces des pores ouverts du matériau. La protection obtenue est encore trop sensible à l'humidité.

La modification de verres à base phosphate, c'est-à-dire ici de verres dans lesquels l'anhydride phosphorique P₂O₅ est le principal oxyde formateur du réseau du verre, afin de réduire leur sensibilité à la corrosion par l'humidité a déjà été étudiée.

Une solution connue, décrite par L. Montagne et al. dans la publication "Journal of Non-Crystalline Solids" 155 (1993) Avril, No 2, Amsterdam NL, p. 115-121, consiste à incorporer un précurseur d'oxyde modificateur, en l'espèce l'alumine, dans une solution de polyphosphate, de manière à obtenir un gel, d'où un verre à base phosphate ayant une résistance accrue à la corrosion par l'humidité peut être obtenu.

Une autre solution connue, décrite notamment dans le document EP-A-0365235, consiste à ajouter également des oxydes modificateurs, en particulier l'oxyde de zinc ZnO, et à élaborer le verre par fusion d'un mélange de ses différents constituants.

L'utilisation de bases verrières de type phosphate modifiées pour former une protection interne anti-oxydation peu sensible à l'humidité, dans des matériaux poreux contenant du carbone, peut être envisagée. Toutefois, le problème qui se pose est celui de la mise en oeuvre de cette protection.

L'utilisation d'un polyphosphate sous forme de gel, comme décrit dans l'article évoqué plus haut est exclue, l'imprégnation au sein de la porosité du matériau étant impossible.

Il pourrait être envisagé de réaliser l'imprégnation du matériau poreux à protéger par la base verrière souhaitée à l'état fondu. Toutefois, ceci soulèverait des difficultés. D'une part, il serait nécessaire d'opérer sous pression et à température élevée, ce qui rendrait le procédé complexe et coûteux. D'autre part, la porosité des matériaux, que ce soit du carbone ou du graphite massif ou un matériau composite densifié, est de faibles dimensions et l'imprégnation en profondeur demande une composition d'imprégnation ayant une viscosité assez faible, inférieure à celle du verre fondu.

Une autre possibilité pourrait consister à introduire les constituants de la base verrière de type phosphate modifiée, ou des précurseurs de ceux-ci, sous forme de poudres en suspension dans un véhicule liquide, à imprégner le matériau poreux par cette suspension, puis à former la base verrière par traitement thermique, après séchage du matériau imprégné. Là encore, la porosité est de trop faibles dimensions pour permettre une infiltration en profondeur par des particules solides.

Pour les applications visées par la présente invention, la technique la mieux adaptée apparaît donc être l'imprégnation du matériau poreux par une solution aqueuse totale de précurseurs de la base verrière de type phosphate souhaitée.

L'utilisation d'une solution aqueuse de précurseurs de verre à base phosphate est certes déjà décrite dans le document US-A-3 351 477 mentionné plus haut. Toutefois, le verre obtenu est sensible à l'humidité. En effet, il contient bien une certaine quantité d'oxyde modificateur ZnO, mais dans une proportion insuffisante pour le rendre insensible à l'humidité. Or, le mode opératoire décrit dans ce document ne permet pas d'augmenter la quantité relative d'oxyde de zinc, ou de son précurseur sous forme de phosphate de zinc, dans la solution d'imprégnation dans la mesure nécessaire pour que l'oxyde de zinc soit présent dans le verre à base phosphate en proportion suffisante pour réduire de façon significative la sensibilité à l'humidité. Les essais effectués par la demanderesse ont en effet montré que les tentatives d'augmentation des quantités d'oxyde ou de phosphate de zinc dans la solution d'imprégnation rendent celle-ci instable et conduisent à la formation de précipités de phosphates.

Aussi, le but visé par la présente invention est de fournir un procédé permettant la formation d'une protection anti-oxydation interne sous forme d'une base verrière de type phosphate très peu sensible à l'humidité au sein d'un matériau poreux contenant du carbone, et ce par imprégnation du matériau par une solution aqueuse de précurseurs de la base verrière. Le but visé est aussi de réaliser l'imprégnation avec une solution aqueuse dont la concentration en précurseurs soit aussi grande que possible pour obtenir un rendement d'imprégnation élevé et obtenir la protection interne recherchée avec une seule imprégnation.

Ce but est atteint grâce à un procédé pour la protection d'un matériau poreux contenant du carbone contre l'oxydation et l'oxydation catalytique du carbone, comportant les étapes qui consistent à :
- préparer une solution aqueuse contenant les précurseurs d'une base verrière phosphate modifiée au moins par la présence d'oxyde de zinc,
- imprégner le matériau poreux par la solution aqueuse de manière qu'elle pénètre la porosité accessible du matériau,
- sécher le matériau imprégné, et
- réaliser un traitement thermique pour former un revêtement interne de protection contre l'oxydation constitué par ladite base verrière à base phosphate modifiée,
procédé dans lequel, conformément à l'invention, les précurseurs sont introduits dans la solution aqueuse de manière à permettre la formation d'une base verrière dans laquelle le rapport molaire entre oxydes modificateurs de verre, comprenant de l'oxyde de zinc, et oxydes formateurs de verre, comprenant principalement ou seulement l'anhydride phosphorique, est au moins égal à 0,6 pour conférer à la base verrière phosphate une résistance à la corrosion par l'humidité, et
- la solution est réalisée en dissolvant d'abord dans l'eau un polyphosphate capable de permettre la mise en solution ultérieure, de façon stable, sans formation de précipité, de la quantité nécessaire de sels précurseurs des oxydes modificateurs comprenant au moins un sel de zinc.

Les termes "base verrière phosphate" désignent ici aussi bien un verre à base phosphate qu'une composition à base phosphate qui, en fusion, se comporte comme un verre mais dans laquelle une phase cristalline peut apparaître au refroidissement et/ou avec le temps, ce qui se traduit par une dévitrification partielle (verre contenant des grains cristallins).

Le rapport molaire entre oxydes modificateurs et oxydes formateurs de verre qu'il est nécessaire d'atteindre pour obtenir une résistance élevée à la corrosion par l'humidité dépend de la nature des constituants de la base verrière, notamment des oxydes modificateurs présents avec l'oxyde de zinc. Dans un système ZnO/P₂O₅, le rapport molaire entre ZnO et P₂O₅ doit être de préférence supérieur à 1. En effet, la vitesse de corrosion est divisée par un facteur d'environ 100 lorsque le rapport molaire entre ZnO et P₂O₅ passe d'une valeur légèrement inférieure à 1 à une valeur légèrement supérieure à 1. Dans un système comportant, outre ZnO et P₂O₅, d'autres oxydes formateurs et/ou modificateurs, la valeur minimale du rapport molaire entre oxydes modificateurs et oxydes formateurs peut être inférieure à 1. Il apparaît toutefois préférable que ce rapport soit en toutes circonstances au moins égal à 0,6, et, mieux encore, au moins égal à 0,9.

Le choix du phosphate dissous en premier dans l'eau est essentiel pour permettre ensuite la dissolution de la quantité voulue de sels précurseurs des oxydes modificateurs, de même que pour atteindre une concentration élevée de tous les précurseurs dans la solution, sans compromettre la stabilité de celle-ci. L'utilisation d'acide phosphorique est exclue, celui-ci n'offrant pas la possibilité d'obtenir une solution stable avec les proportions et concentrations souhaitées de sels précurseurs d'oxydes modificateurs. Ainsi, alors que dans le document US-A-3 351 477 précité une concentration élevée de précurseurs dans la solution d'imprégnation est recherchée sans compromettre la stabilité de la solution, le fait de dissoudre en premier de l'acide phosphorique fait que le rapport molaire entre ZnO et P₂O₅ n'atteint que 0,5, c'est-à-dire une valeur largement insuffisante pour conférer à la protection interne obtenue une bonne résistance à la corrosion par l'humidité. De plus, l'acide phosphorique pose des problèmes de stabilité lors du traitement thermique et sa présence résiduelle dans le verre tend encore à limiter la résistance à l'humidité.

Le phosphate dissous en premier est un polyphosphate, avantageusement du métaphosphate de sodium ou du trimétaphosphate de sodium, qui permet la mise en solution de la proportion nécessaire de précurseurs par complexation des cations introduits ultérieurement.

Le sel précurseur de l'oxyde de zinc, de préférence du nitrate de zinc ou du sulfate de zinc est introduit en second dans la solution.

Il est ainsi possible d'obtenir une solution d'imprégnation totale et stable tout en ayant une concentration élevée en précurseurs de la base verrière, la proportion en masse de ces précurseurs dans la solution pouvant être égale ou supérieure à 50 %.

La viscosité de la solution doit toutefois être suffisamment faible pour permettre une imprégnation en profondeur du matériau, en particulier lorsque la porosité ouverte accesible est de petites dimensions, comme c'est le cas pour des carbones et graphites massifs ou des composites contenant du carbone. La viscosité est typiquement comprise entre 0,1 et 10 dPa.s, de préférence entre 0,1 et 1 dPa.s

La stabilité de la solution peut encore être améliorée en maintenant une acidité suffisante, de préférence un pH inférieur à 0,5. Cette acidité est assurée en ajoutant des précurseurs d'oxydes de façon adéquate, par exemple le dihydrogénophosphate de potassium, l'acide borique, le phosphate d'ammonium, ... en excluant toutefois l'acide phosphorique.

Toujours dans le but d'améliorer la stabilité, il est possible d'ajouter aux précurseurs un ou plusieurs agents stabilisants organiques ayant un caractère fugitif, c'est-à-dire qui s'éliminent totalement lors du traitement thermique final. De tels agents stabilisants fugitifs sont notamment les acides oxalique, tartrique et citrique.

D'autres précurseurs sont ajoutés à la solution en fonction de la composition souhaitée de la base verrière, par exemple des précurseurs d'oxydes tels que : oxydes de cuivre, de cobalt, de nickel, de fer, de magnésium et/ou de plomb, des précurseurs d'oxydes de lithium et/ou de potassium, des précurseurs des oxydes de bismuth, d'aluminium et/ou de bore et des précurseurs des oxydes de vanadium et/ou de titane.

Pour atteindre la proportion voulue d'anhydride phosphorique dans la base verrière, un précurseur de cet oxyde peut être ajouté dans la solution, par exemple du phosphate d'ammonium, en excluant l'acide phosphorique.

L'invention a aussi pour objet un matériau poreux contenant du carbone et muni d'une protection interne contre l'oxydation et l'oxydation catalytique du carbone, la protection interne étant constituée d'une couche ancrée dans la porosité du matériau et formée par une base verrière phosphate modifiée au moins par la présence d'oxyde de zinc, matériau dans lequel, conformément à l'invention, la composition de la base verrière, exprimée en moles d'oxydes, est la suivante :
20 à 60 %, de préférence 20 à 50 %, de P₂O₅,
10 à 30 % de ZnO,
10 à 30 % de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 20 %, de préférence 0 à 15 %, d'au moins un oxyde choisi parmi Bi₂O₃, Al₂O₃ et B₂O₃, et
0 à 5 % d'au moins un oxyde choisi parmi V₂O₅ et TiO₂
avec un rapport molaire entre oxydes modificateurs, comprenant l'oxyde de zinc et oxydes formateurs, comprenant principalement ou seulement l'anhydride phosphorique, suffisamment élevé pour conférer à la base verrière phosphate une résistance à la corrosion par l'humidité.

Alors que des compositions verrières à base phosphate comprenant des oxydes modificateurs en vue d'améliorer la résistance à l'humidité sont connues, l'invention est remarquable en ce que le dépôt est ancré au coeur de la porosité accessible du matériau poreux à protéger, pour constituer une protection interne couvrant les surfaces des pores ouverts.

Dans la composition définie plus haut, outre l'anhydride phosphorique P₂O₅ qui constitue l'oxyde formateur de verre principal ou unique, les autres oxydes normalement formateurs qui peuvent être présents sont l'oxyde de bore B₂O₃ et l'oxyde de vanadium V₂O₅, les autres oxydes étant des oxydes modificateurs.

Le choix de la nature et des quantités respectives des constituants de la solution utilisée pour imprégner le matériau à protéger est déterminé en fonction de la composition souhaitée de la base verrière et de la possibilité d'introduire ces constituants dans les quantités nécessaires dans une solution aqueuse stable.

Comme déjà indiqué, la présence d'oxydes modificateurs en proportion importante dans la base verrière est indispensable pour conférer à celle-ci la résistance à l'humidité souhaitée. Il en résulte la nécessité d'introduire dans la solution des quantités relatives élevées de sels précurseurs des oxydes modificateurs. Selon l'invention, cela est rendu possible en dissolvant d'abord dans l'eau un polyphosphate qui permet, par complexation, la mise en solution ultérieure de telles quantités de sels précurseurs, notamment de sel de zinc, plus particulièrement un polyphosphate comme le métaphosphate de sodium NaPO₃ ou le trimétaphosphate de sodium.

P₂O₅ peut aussi provenir de la présence d'autres phosphates tels que le phosphate d'ammonium NH₄H₂PO₄ ou le phosphate de potassium KH₂PO₄, ce dernier pouvant également permettre de maintenir l'acidité souhaitée pour la stabilité de la solution.

Le précurseur de B₂O₃ est par exemple l'acide borique H₃BO_{3,} celui de V₂O₃ pouvant être le vanadate d'ammonium NH₄VO_{3.}

Les précurseurs des oxydes métalliques, notamment ZnO, et des oxydes de métaux alcalins sont par exemple des nitrates ou des sulfates. De préférence, le précurseur de ZnO est le nitrate de zinc Zn (NO₃)₂, 6H₂O. La combinaison du métaphosphate de sodium et du nitrate de zinc offre la caractéristique particulière de former un complexe qui évite alors que la présence du cation Zn²⁺ conduise, comme cela se produirait si on opérait d'une autre façon, à la précipitation de chaînes longues de phosphate de sodium.

Différents exemples illustrant l'efficacité de la présente invention seront décrits ci-après. Dans tous les exemples, la solution aqueuse de précurseurs de la base verrière est réalisée en introduisant en premier, dans l'eau, un phosphate condensé, dans ces exemples du métaphosphate de sodium, puis, en second, un sel précurseur de ZnO, dans ces exemples Zn (NO₃)₂, 6H₂O, l'ordre d'introduction suivante des autres précurseurs étant moins critique.

L'imprégnation du matériau à protéger est par exemple réalisée à température ambiante en immergeant celui-ci dans un bain de la solution aqueuse de précurseurs dont la viscosité est comprise entre 0,1 et 10 dPa.s On établit le vide avant ou après immersion , ou une surpression après immersion, afin de permettre l'infiltration de la solution dans la porosité accessible du matériau.

Après séchage, par exemple en étuve, pour éliminer l'eau de la solution, un traitement thermique est effectué pour que la composition de la base verrière atteigne son équilibre physico-chimique. Pour les bases verrières qui sont recherchées dans le cadre de la présente invention, le traitement thermique est effectué à une température d'environ 350°C à 950°C.

Le traitement thermique peut être effectué de préférence sous atmosphère neutre, par exemple sous azote (N₂₎. Il peut aussi être effectué sous atmosphère réactive, par exemple nitrurante, sous ammoniac éventuellement additionné d'hydrogène (NH₃ + H₂), la nitruration de la base verrière pouvant encore améliorer la résistance à la corrosion par l'humidité.

### Exemple 1

Cet exemple a pour but de comparer la tenue à l'humidité d'un verre (verre 1) dont la composition est celle d'un revêtement de protection interne anti-oxydation de l'art antérieur, plus précisément tel que décrit dans le document FR-A-2 685 694 déjà cité, avec la tenue à l'humidité de verres (verres 2 et 3) dont la composition est celle d'un revêtement de protection interne anti-oxydation réalisé conformément à l'invention.

Le tableau I ci-après donne les compositions des solutions élaborées en vue de l'obtention des verres 1, 2 et 3, ainsi que, pour les solutions correspondant aux verres 2 et 3, l'ordre d'introduction des précurseurs. Pour chaque solution, les précurseurs sont dissous dans 30 cm³ d'eau. Les concentrations des solutions en précurseurs sont également indiquées, ainsi que le rendement en verre de chaque solution.

Les solutions obtenues restent stables et limpides pendant plusieurs jours.

Après séchage à l'étuve, la pâte recueillie pour chaque solution est portée progressivement à une température d'environ 900°C pendant une heure dans un creuset réfractaire sous atmosphère neutre, phase au cours de laquelle la transformation des précurseurs en verre se déroule. Les verres 1, 2, 3 ainsi obtenus sont coulés sous forme de barreaux massifs, d'une masse d'environ 3 g, à l'intérieur d'un moule en carbone massif.

**Tableau I**

| Précurseurs | Solution verre 1 | Solution verre 2 | | Solution verre 3 | |
|---|---|---|---|---|---|
| | Composition précurseurs (g) | Composition précurseurs (g) | Ordre introduction précurseurs | Composition précurseurs (g) | Ordre introduction précurseurs |
| Na H₂PO₄ | 22,5 | | | | |
| NaPO₃ | | 12,2 | 1 | 6,8 | 1 |
| Zn(NO₃)2, 6H₂O | | 15,8 | 2 | 13,4 | 2 |
| LiNO₃ | | | | 2,3 | 3 |
| KH₂PO₄ | 7,5 | 5,5 | 3 | 4,6 | 4 |
| NH₄H₂PO₄ | | | | 11,6 | 5 |
| H₃BO₃ | | | | 1 | 6 |
| Concentration en précurseurs (g/l) | 1000 | 1000 | | 1000 | |
| Rendement en verre (g/l) | 850 | 600 | | 650 | |

Le tableau II ci-après donne la composition, exprimée en pourcentages molaires d'oxydes, des verres 1, 2, 3 ainsi que leur température de transition Tg.

Les barreaux de verre sont chacun immergés dans 100 ml d'eau à 100°C. Le barreau de verre 1 est entièrement dissous après 10 minutes. Les barreaux de verre 2 et 3 sont maintenus pendant une heure et la perte de masse est mesurée. Le tableau II indique les vitesses de corrosion des verres en pourcentage de perte massique par minute.

On peut ainsi constater que la réalisation d'un verre par un procédé conforme à l'invention permet d'augmenter de façon très significative la résistance à la corrosion par l'humidité, tout en conservant une élaboration à partir d'une solution aqueuse concentrée stable, à fort rendement, et un bas point de fusion.

**Tableau II**

| Constitution exprimée en % molaires d'oxydes | Verre 1 | Verre 2 | Verre 3 |
|---|---|---|---|
| P₂O₅ | 50 | 37,4 | 46,5 |
| ZnO | | 25,2 | 20,4 |
| Na₂O | 38,6 | 28 | 15,1 |
| K₂O | 11,4 | 9,3 | 7,6 |
| Li₂O | | | 7,6 |
| B₂O₃ | | | 3,8 |
| Tg (°C) | 270 | 270 | 270 |
| Vitesse de corrosion (% massique/mn) | 10 | 0,2 | 0,1 |

### Exemple 2

Cet exemple illustre l'efficacité, vis-à-vis de l'oxydation et de l'oxydation catalytique du carbone, d'une protection interne obtenue conformément à l'invention.

Des éprouvettes parallélépipédiques en matériau composite carbone-carbone ayant une porosité résiduelle ouverte d'environ 10 % en volume, et de dimensions 25 x 20 x 6 mm³ sont imprégnées sous vide, à température ambiante, avec une solution aqueuse ayant la composition suivante en pourcentage massique (le chiffre entre parenthèses indique l'ordre d'introduction des précurseurs) :

| | |
|---|---|
| H₂O | 42,5 % |
| NaPO₃ (1) | 16,6 % |
| Zn(NO₃)₂, 6H₂O(2) | 20,7 % |
| KH₂PO₄(3) | 6,5 % |
| H₃BO₃(4) | 1,6 % |
| H₆NPO₄(5) | 12,1 % |

Les éprouvettes sont ensuite séchées en étuve puis traitées thermiquement sous atmosphère neutre à une température d'environ 750°C.

La composition obtenue (verre 4), exprimée en pourcentages molaires d'oxydes, est la suivante :

| | |
|---|---|
| P₂O₅ | 45,6 % |
| ZnO | 20,2 % |
| Na₂O | 23,5 % |
| K₂O | 6,9 % |
| B₂O₃ | 3,8 %, |

ce qui donne un rapport molaire d'environ 1,02 entre oxydes modificateurs et oxydes formateurs (P₂O₅ et B₂O₃).

La masse relative du verre dans les éprouvettes est d'environ 2 %.

Après traitement thermique et retour à la température ambiante, certaines éprouvettes sont imprégnées avec une solution d'acétate de potassium qui joue le rôle de catalyseur d'oxydation du carbone.

Des éprouvettes munies de la protection anti-oxydation interne constituée par le verre ci-dessus, sans pollution par l'acétate de potassium (éprouvettes A) et avec pollution par l'acétate de potassium (éprouvettes B) sont maintenues pendant 5 heures à 650°C sous air. A titre de comparaison de mêmes éprouvettes en carbone-carbone, non revêtues de la protection anti-oxydation, sans pollution par l'acétate de sodium (éprouvettes C) et avec pollution par l'acétate de potassium (éprouvettes D) sont soumises au même traitement d'oxydation. A la fin de celui-ci, la perte de masse relative moyenne pour chaque série d'éprouvettes est mesurée, ce qui donne le résultat suivant :
- éprouvettes A : 0,1 %
- éprouvettes B : 0,3 %
- éprouvettes C : 5 %
- éprouvettes D : 99 %

L'efficacité de la protection anti-oxydation réalisée conformément à l'invention peut donc être constatée, même en présence de catalyseur.

### Exemple 3

Cet exemple vise à montrer l'homogénéité de la protection anti-oxydation dans le volume d'une pièce traitée.

Une pièce cylindrique en matériau composite carbone-carbone de diamètre 160 mm et d'épaisseur 30 mm, ayant une porosité résiduelle ouverte d'environ 10 % en volume, est munie d'une protection interne anti-oxydation comme décrit dans l'exemple 2. Des éprouvettes parallélépipédiques de dimensions 25 x 20 x 6 mm³ sont prélevées au centre du cylindre puis imprégnées par une solution d'un catalyseur d'oxydation du carbone (en l'occurence l'acétate de potassium). Ainsi traitées, les éprouvettes sont maintenues pendant 5 heures à 650°C sous air. La perte de masse relative moyenne mesurée est de 0,7 %.

Bien que supérieure à celle mesurée pour les éprouvettes B de l'exemple 2, cette perte de masse est très inférieure à celle mesurée avec des éprouvettes non protégées (éprouvettes C et D de l'exemple 2), ce qui démontre l'efficacité de la protection dans la masse du matériau. Il en est ainsi du fait de la capacité de la solution d'imprégner la porosité ouverte du matériau jusqu'au coeur de celui-ci, et de permettre l'usinage de pièces, constituées par ce matériau, après le traitement de protection.

### Exemple 4

Cet exemple montre la possibilité, par ajout d'un précurseur convenable, d'ajuster la composition du verre pour améliorer une de ses propriétés ou lui conférer une propriété particulière.

Dans cet exemple, on recherche à améliorer le pouvoir mouillant du verre sur une surface de carbone afin de parfaire sa fonction de protection. Ceci est obtenu en ajoutant de l'oxyde de vanadium V₂O₅ à la composition du verre.

A cet effet, on utilise une solution aqueuse dont la composition, en pourcentage massique, est la suivante (les chiffres entre parenthèses indiquent l'ordre d'introduction des précurseurs dans la solution)

| | |
|---|---|
| H₂O | 42,7 % |
| NaPO₃(1) | 16,1 % |
| Zn(NO₃)₂, 6H₂O(2) | 20,1 % |
| KH₂PO₄(3) | 6,3 % |
| H₃BO₃(4) | 1,6 % |
| NH₄H₂PO₄(5) | 11,7 % |
| NH₄VO₃(6) | 1,5 % |

La composition obtenue (verre 5) exprimée en pourcentages molaires d'oxydes est la suivante :

| | |
|---|---|
| P₂O₅ | 44,8 % |
| ZnO | 19,8 % |
| Na₂O | 23 % |
| K₂O | 6,8 % |
| B₂O₃ | 3,7 % |
| V₂O₅ | 1,9 %, |

ce qui donne un rapport molaire d'environ 0,99 entre oxydes modificateurs et oxydes formateurs (P₂O_{5,} B₂O₃, V₂O₅).

On observe en coupe une meilleure répartition de la protection dans le matériau et sur le matériau.

### Exemple 5

Toujours avec l'objectif d'ajuster la composition pour améliorer une de ses propriétés, on cherche à favoriser la résistance du verre à la corrosion par l'eau grâce à la présende d'oxyde de cuivre CuO.

Une solution aqueuse est préparée avec la composition en masse suivante (les chiffres entre parenthèses indiquent l'ordre d'introduction des précurseurs dans la solution) :

| | |
|---|---|
| H₂O | 30 g |
| NaPO₃ (1) | 12,2 g |
| Zn(NO₃)₂, 6H₂O(2) | 15,8 g |
| KH₂PO₄(3) | 5,5 g |
| CuSO₄, 3H₂O(4) | 12,2 g. |

La composition obtenue (verre 6), exprimée en pourcentages molaires d'oxydes est :

| | |
|---|---|
| P₂O₅ | 30,4 % |
| ZnO | 20 % |
| CuO | 19,2 % |
| Na₂O | 22,8 % |
| K₂O | 7,6 %, |

ce qui donne un rapport molaire d'environ 2,3 entre oxydes modificateurs et oxyde formateur (P₂O₅).

Comme dans l'exemple 1, le verre est moulé sous forme d'un barreau massif maintenu pendant 1 heure dans 100 ml d'eau à 100°C. La vitesse de corrosion mesurée, exprimée en perte massique relative, est d'environ 2.10⁻⁴ % par minute, ce qui est nettement inférieur aux valeurs obtenues avec les verres 2 et 3 de l'exemple 1.

### Exemple 6

On cherche encore dans cet exemple à favoriser la résistance à la corrosion par l'eau, tout en maintenant un potentiel élevé de protection contre l'oxydation.

A une solution préparée comme décrit dans l'exemple 2, on ajoute une solution concentrée à 50 % de dihydrogénophosphate d'aluminium AlH₂PO₄ dans une proportion en masse de 30 %. Après traitement thermique, on obtient la composition suivante (verre 7) exprimée en pourcentages molaires d'oxydes :

| | |
|---|---|
| P₂O₅ | 46,3 % |
| ZnO | 16,2 % |
| Na₂O | 20,3 % |
| K₂O | 5,9 %, |
| B₂O₃ | 3,3 % |
| Al₂O₃ | 7 %, |

ce qui donne un rapport molaire d'environ 1,02 entre oxydes modificateurs et oxydes formateurs (P₂O₅ et B₂O₃).

Des éprouvettes en carbone-carbone identiques à celles décrites dans l'exemple 2 sont munies de protection interne constituées par les verres 4 (exemple 2) et 7 (respectivement éprouvettes I et II) suivant le processus décrit dans cet exemple 2.

Les éprouvettes ainsi traitées sont maintenues pendant 16 heures dans de l'eau à température ambiante. Les vitesses de corrosion des verres mesurées en pourcentage de perte massique sont :
- pour les éprouvettes I (verre 4) : 1,87 % / heure
- pour les éprouvettes II (verre 7) : 0,03 % / heure.

La présence d'alumine apporte une amélioration sensible de la résistance à la corrosion par l'eau.

De mêmes éprouvettes sont maintenues pendant 15 heures à 650°C sous air. Les pertes de masse relative mesurées sont les suivantes :
- pour les éprouvettes I (verre 4) : 0,38 %
- pour les éprouvettes II (verre 7) : 0,31 %.

On constate que le pouvoir de protection contre l'oxydation est conservé (voire même légèrement amélioré) tout en accroissant de façon significative la résistance à l'humidité.

Les exemples qui précèdent démontrent l'efficacité de la présente invention pour l'obtention d'une protection interne effective contre l'oxydation et l'oxydation catalytique du carbone présentant une résistance élevée à la corrosion par l'humidité.

Cela n'exclut pas la possibilité d'associer à cette protection interne une protection externe anti-oxydation sous forme d'un revêtement de surface ancré dans la porosité superficielle du matériau. Cette protection externe est réalisée par exemple par pistolettage ou étalement à la brosse d'une composition sous forme d'une solution ou d'une suspension de précurseurs de la protection externe qui, après séchage, est soumise à un traitement thermique. La composition contenant les précurseurs de la protection externe peut être mise en oeuvre après imprégnation par la composition précurseur de la protection interne et éventuellement séchage, les protections interne et externe étant ensuite générées par un même traitement thermique.

Afin d'assurer une compatibilité physico-chimique entre les protections interne et externe, il est avantageux d'utiliser pour la composition précurseur de la protection externe une composition analogue à la composition d'imprégnation précurseur de la protection interne. Divers constituants pourront toutefois être ajoutés, en suspension ou en solution, pour conférer à la protection externe des propriétés spécifiques. Cest ainsi que des oxydes réfractaires, par exemple de la silice (SiO₂) sous forme colloïdale, peuvent être ajoutés pour conférer à la protection externe une tenue à des températures plus élevées, par rapport à la protection interne, élargissant ainsi la plage de température d'utilisation pour le matériau.

## Revendications

1. Procédé pour la protection d'un matériau poreux contenant du carbone, contre l'oxydation et l'oxydation catalytique du carbone, comportant les étapes qui consistent à:
- préparer une solution aqueuse contenant les précurseurs d'une base verrière phosphate modifiée au moins par la présence d'oxyde de zinc,
- imprégner le matériau poreux par la solution aqueuse de manière qu'elle pénètre la porosité accessible du matériau,
- sécher le matériau imprégné, et
- réaliser un traitement thermique pour former un revêtement interne de protection contre l'oxydation constitué par ladite base verrière phosphate modifiée, caractérisé en ce que :
- les précurseurs sont introduits dans la solution aqueuse de manière à permettre la formation d'une base verrière dans laquelle le rapport molaire entre oxydes modificateurs de verre, comprenant de l'oxyde de zinc et oxydes formateurs de verre, comprenant principalement ou seulement l'anhydride phosphorique, est au moins égal à 0,6 pour conférer à la base verrière phosphate une résistance à la corrosion par l'humidité, et
- la solution est réalisée en dissolvant d'abord dans l'eau un polyphosphate capable de permettre la mise en solution ultérieure, de façon stable, sans formation de précipité, de la quantité nécessaire de sels précurseurs des oxydes modificateurs comprenant au moins un sel de zinc.

2. Procédé selon la revendication 1, caractérisé en ce que les précurseurs sont introduits dans la solution aqueuse de manière à permettre la formation d'une base verrière phosphate dans laquelle le rapport molaire entre oxydes modificateurs et oxydes formateurs est au moins égal à 0,9.

3. Procédé selon l'une quelconque des revendications 1 et 2, caractérisé en ce que le polyphosphate dissous en premier est un polyphosphate choisi parmi le métaphosphate de sodium et le trimétaphosphate de sodium.

4. Procédé selon l'une quelconque des revendications 1 à 3, caractérisé en ce que le sel de zinc est introduit en second dans la solution aqueuse.

5. Procédé selon l'une quelconque des revendications 1 à 4, caractérisé en ce que le sel de zinc introduit dans la solution aqueuse est l'un au moins des sels constitués par le nitrate de zinc et le sulfate de zinc.

6. Procédé selon l'une quelconque des revendications 1 à 3, caractérisé en ce que la proportion en masse de précurseurs dans la solution est égale ou supérieure à 50 %.

7. Procédé selon l'une quelconque des revendications 1 à 6, caractérisé en cc que la viscosité de la solution aqueuse est comprise entre 0,1 et 10 dPa.s.

8. Procédé selon l'une quelconque des revendications 1 à 7, caractérisé en ce que la solution est acide.

9. Procédé selon la revendication 8, caractérisé en ce que la solution a un pH inférieur à 0,5.

10. Procédé selon l'une quelconque des revendications 8 et 9, caractérisé en ce que l'acidité est contrôlée par ajout de précurseurs d'oxydes.

11. Procédé selon l'une quelconque des revendications 1 à 10, caractérisé en ce que l'on introduit dans la solution au moins un sel précurseur d'oxyde métallique choisi parmi les oxydes de cuivre, de cobalt, de nickel, de fer, de magnésium et de plomb.

12. Procédé selon la revendication 11, caractérisé en ce que l'on introduit dans la solution du sulfate de cuivre en tant que précurseur de l'oxyde de cuivre.

13. Procédé selon l'une quelconque des revendications 1 à 12, caractérisé en ce que l'on introduit dans la solution au moins un précurseur des oxydes de lithium et de potassium.

14. Procédé selon l'une quelconque des revendications 1 à 12, caractérisé en ce que l'on introduit dans la solution au moins un précurseur des oxydes de bismuth, d'aluminium et de bore.

15. Procédé selon l'une quelconque des revendications 1 à 14, caractérisé en ce que l'on introduit dans la solution au moins un précurseur des oxydes de vanadium et de titane.

16. Procédé selon l'une quelconque des revendications 1 à 15, caractérisé en ce que l'on ajoute à la solution de précurseurs au moins un agent organique stabilisant ayant un caractère fugitif.

17. Procédé selon la revendication 16, caractérisé en ce que l'agent stabilisant fugitif est choisi parmi les acides oxalique, tartrique et citrique.

18. Procédé selon l'une quelconque des revendications 1 à 17, caractérisé en ce que l'on introduit dans la solution un précurseur d'anhydride phosphorique à l'exclusion de l'acide phosphorique.

19. Procédé selon la revendication 18, caractérisé en ce que le précurseur d'anhydride phosphorique est le phosphate d'ammonium.

20. Procédé selon l'une quelconque des revendications 1 à 19, caractérisé en ce que le traitement thermique est réalisé sous atmosphère nitrurante.

21. Procédé selon l'une quelconque des revendications 1 à 20, caractérisé en ce qu'il comprend en outre la formation d'un revêtement externe de protection contre l'oxydation ancré dans la porosité superficielle du matériau.

22. Procédé selon la revendication 21, caractérisé en ce que la formation du revêtement externe comprend le dépôt à la surface du matériau d'une composition contenant les précurseurs de la protection externe.

23. Procédé selon la revendication 22, caractérisé en ce que la composition contenant les précurseurs de la protection externe est formée à partir de la solution aqueuse contenant les précurseurs de la protcction interne.

24. Procédé selon la revendication 23, caractérisé en ce que la composition contenant les précurseurs de la protection externe comprend en outre de la silice sous forme colloïdale.

25. Matériau poreux contenant du carbone et muni d'une protection interne contre l'oxydation et l'oxydation active du carbone, la protection interne étant constituée d'une couche ancrée dans la porosité ouverte accessible du matériau et formée par une base verrière phosphate modifiée au moins par la présence d'oxyde de zinc,
caractérisé en ce que la composition de la base verrière, exprimée en pourcentage molaire d'oxydes est la suivante :
20 à 60% de P₂O₅,
10 à 30 % de ZnO,
10 à 30% de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 20 % d'au moins un oxyde choisi parmi Bi₂O₃, Al₂O₃ et B₂O₃, et
0 à 5 % d'au moins un oxyde choisi parmi V₂O₅ et TiO₂,
avec un rapport molaire entre oxydes modificateurs, comprenant l'oxyde de zinc et oxydes formateurs, comprenant principalement ou seulement l'anhydride phosphorique, au moins égal à 0,6 pour conférer à la base verrière phosphate une résistance à la corrosion par l'humidité.

26. Matériau selon la revendication 25, caractérisé en ce que la composition de la base verrière, exprimée en pourcentage molaire d'oxydes est la suivante :
20 à 50 % de P₂O₅,
10 à 30 % de ZnO,
10 à 30 % de Na₂O,
0 à 20 % d'au moins un oxyde choisi parmi CuO, CoO, NiO, FeO, MgO et PbO,
0 à 15 % d'au moins un oxyde de métal alcalin choisi parmi Li₂O et K₂O,
0 à 15 % d'au moins un oxyde choisi parmi Bi₂O₃, Al₂O₃ et B₂O₃, et
0 à 5 % d'au moins un oxyde choisi parmi V₂O₅ et TiO_{2.}

27. Matériau selon l'une quelconque des revendications 25 et 26, caractérisé en ce que ledit rapport molaire est au moins égal à 0,9.

## Patentansprüche

1. Verfahren zum Schutz eines Kohlenstoff enthaltenden porösen Materials gegen Oxidation und katalytische Oxidation des Kohlenstoffs, folgende Schritte enthaltend, die bestehen in:
- Herstellen einer wässrigen Lösung, welche die Vorläufer eines Glases auf Phosphatbasis, modifiziert mindestens durch die Anwesenheit von Zinkoxid, enthält,
- Imprägnieren des porösen Materials mit der wässrigen Lösung dergestalt, daß sie in die zugängliche Porosität des Materials eindringt,
- Trocknen des imprägnierten Materials, und
- Durchführen einer thermischen Behandlung zur Bildung einer inneren Beschichtung zum Schutz gegen Oxidation, die besteht aus dem modifizierten Glas auf Phosphatbasis, dadurch gekennzeichnet, daß:
- die Vorläufer dergestalt in die wässrige Lösung eingebracht werden, daß sie die Bildung eines Glasgrundstoffs erlauben, in dem das Molverhältnis zwischen glasmodifizierenden Oxiden, die Zinkoxid aufweisen, und glasbildenden Oxiden, die hauptsächlich oder nur Phosphorsäureanhydrid aufweisen, mindestens gleich 0,6 ist, um dem Glas auf Phosphatbasis eine Beständigkeit gegen Korrosion durch Feuchtigkeit zu verleihen,
- die Lösung hergestellt wird, indem in dem Wasser zuerst ein Polyphosphat aufgelöst wird, das in der Lage ist, das spätere in Lösung Bringen der notwendigen Menge an Vorläufersalzen der modifizierenden Oxide, die mindestens ein Zinksalz aufweisen, auf stabile Weise, ohne Niederschlagsbildung, zu erlauben.

2. Verfahren nach Anspruch 1, dadurch gekennzeichnet, daß die Vorläufer dergestalt in die wässrige Lösung eingebracht werden, daß sie die Bildung eines Glases auf Phosphatbasis, in dem das Molverhältnis zwischen modifizierenden Oxiden und bildenden Oxiden mindestens gleich 0,9 ist, erlauben.

3. Verfahren nach Anspruch 1 oder 2, dadurch gekennzeichnet, daß das zuerst aufgelöste Polyphosphat ein Polyphosphat ist, das ausgewählt ist aus Natrium-metaphosphat und Natriumtrimetaphosphat.

4. Verfahren nach einem der Ansprüche 1 bis 3, dadurch gekennzeichnet, daß das Zinksalz als zweites in die wässrige Lösung eingebracht wird.

5. Verfahren nach einem der Ansprüche 1 bis 4, dadurch gekennzeichnet, daß das in die wässrige Lösung eingebrachte Zinksalz mindestens eines der Salze Zinknitrat und Zinksulfat ist.

6. Verfahren nach einem der Ansprüche 1 bis 3, dadurch gekennzeichnet, daß der Masseanteil der Vorläufer in der Lösung gleich oder höher als 50% ist.

7. Verfahren nach einem der Ansprüche 1 bis 6, dadurch gekennzeichnet, daß die Viskosität der wässrigen Lösung zwischen 0,1 und 10 dPa•s liegt.

8. Verfahren nach einem der Ansprüche 1 bis 7, dadurch gekennzeichnet, daß die Lösung sauer ist.

9. Verfahren nach Anspruch 8, dadurch gekennzeichnet, daß die Lösung einen pH unterhalb 0,5 hat.

10. Verfahren nach Anspruch 8 oder 9, dadurch gekennzeichnet, daß die Acidität durch Zugabe von Oxid-Vorläufern kontrolliert wird.

11. Verfahren nach einem der Ansprüche 1 bis 10, dadurch gekennzeichnet, daß mindestens ein Vorläufersalz eines Metalloxids, das ausgewählt wird unter den Oxiden von Kupfer, Kobalt, Nickel, Eisen, Magnesium und Blei, in die Lösung eingebracht wird.

12. Verfahren nach Anspruch 11, dadurch gekennzeichnet, daß Kupfersulfat als Vorläufer von Kupferoxid in die Lösung eingebracht wird.

13. Verfahren nach einem der Ansprüche 1 bis 12, dadurch gekennzeichnet, daß mindestens ein Vorläufer der Oxide von Lithium und Kalium in die Lösung eingebracht wird.

14. Verfahren nach einem der Ansprüche 1 bis 12, dadurch gekennzeichnet, daß mindestens ein Vorläufer der Oxide von Wismuth, von Aluminium und von Bor in die Lösung eingebracht wird.

15. Verfahren nach einem der Ansprüche 1 bis 14, dadurch gekennzeichnet, daß mindestens ein Vorläufer der Oxide von Vanadium und von Titan in die Lösung eingebracht wird.

16. Verfahren nach einem der Ansprüche 1 bis 15, dadurch gekennzeichnet, daß der Lösung der Vorläufer mindestens ein organisches Stabilisierungsmittel mit der Eigenschaft, flüchtig zu sein, zugesetzt wird.

17. Verfahren nach Anspruch 16, dadurch gekennzeichnet, daß das flüchtige Stabilisierungsmittel ausgewählt wird unter Oxalsäure, Weinsäure und Zitronensäure.

18. Verfahren nach einem der Ansprüche 1 bis 17, dadurch gekennezeichnet, daß ein Vorläufer von Phosphorsäureanhydrid unter Ausschluß von Phosphorsäure in die Lösung eingebracht wird.

19. Verfahren nach Anspruch 18, dadurch gekennzeichnet, daß der Vorläufer von Phosphorsäureanhydrid Ammoniumphosphat ist.

20. Verfahren nach einem der Ansprüche 1 bis 19, dadurch gekennzeichnet, daß die thermische Behandlung in nitrierender Umgebung durchgeführt wird.

21. Verfahren nach einem der Ansprüche 1 bis 20, dadurch gekennzeichnet, daß es darüber hinaus die Bildung einer äußeren Schutzbeschichtung gegen Oxidation, die in der Oberflächenporosität des Materials verankert ist, aufweist.

22. Verfahren nach Anspruch 21, dadurch gekennzeichnet, daß die Bildung der äußeren Beschichtung die Abscheidung des Materials einer Zusammensetzung, welche die Vorläufer des äußeren Schutzes enthält, an der Oberfläche aufweist.

23. Verfahren nach Anspruch 22, dadurch gekennzeichnet, daß die Zusammensetzung, welche die Vorläufer des äußeren Schutzes enthält, ausgehend von der wässrigen Lösung, welche die Vorläufer des inneren Schutzes enthält, gebildet wird.

24. Verfahren nach Anspruch 23, dadurch gekennzeichnet, daß die Zusammensetzung, welche die Vorläufer des äußeren Schutzes enthält, darüber hinaus Siliziumoxid in kolloidaler Form enthält.

25. Poröses Material, das Kohlenstoff enthält und mit einem inneren Schutz gegen Oxidation und katalytische Oxidation des Kohlenstoffs ausgestattet ist, wobei der innere Schutz aus einer in der zugänglichen Oberflächenporosität des Materials verankerten Schicht besteht und von einem Glas auf Phosphatbasis, das mindestens durch die Anwesenheit von Zinkoxid modifiziert ist, ausgebildet ist, dadurch gekennzeichnet, daß die Zusammensetzung des Glasgrundstoffs, ausgedrückt als Molprozentsatz der Oxide, die Folgende ist:
20 bis 60% P₂O₅,
10 bis 30% ZnO,
10 bis 30% Na₂O,
0 bis 20% mindestens eines Oxids, das ausgewählt ist aus CuO, CoO, NiO, FeO, MgO und PbO,
0 bis 15% mindestens eines Alkalimetalloxids, das ausgewählt ist aus Li₂O und K₂O,
0 bis 20% mindestens eines Oxids, das ausgewählt ist aus Bi₂O₃, Al₂O₃ und B₂O₃, und
0 bis 5% mindestens eines Oxids, das ausgewählt ist aus V₂O₅ und TiO₂,
mit einem Molverhältnis zwischen modifizierenden Oxiden, die Zinkoxid aufweisen, und bildenden Oxiden, die hauptsächlich oder nur Phosphorsäureanhydrid aufweisen, das mindestens gleich 0,6 beträgt, um dem Glas auf Phosphatbasis Beständigkeit gegen Korrosion durch Feuchtigkeit zu verleihen.

26. Material nach Anspruch 25, dadurch gekennzeichnet, daß die Zusammensetzung des Glasgrundstoffs, ausgedrückt als Molprozentsatz der Oxide, die folgende ist:
20 bis 50% P₂O₅,
10 bis 30% ZnO,
10 bis 30% Na₂O,
0 bis 20% mindestens eines Oxids, das ausgewählt ist aus CuO, CoO, NiO, FeO, MgO und PbO,
0 bis 15% mindestens eines Alkalimetalloxids, das ausgewählt ist aus Li₂O und K₂O,
0 bis 15% mindestens eines Oxids, das ausgewählt ist aus Bi₂O₃, Al₂O₃ und B₂O₃, und
0 bis 5% mindestens eines Oxids, das ausgewählt ist aus V₂O₅ und TiO₂.

27. Material nach Anspruch 25 oder 26, dadurch gekennzeichnet, daß das Molverhältnis mindestens gleich 0,9 ist.

## Claims

1. A process for the protection of a porous carbon-containing material against oxidation and catalytic oxidation of carbon, comprising the steps consisting of:
- preparing an aqueous solution containing the precursors of a glass-containing phosphate base modified at least by the presence of zinc oxide;
- impregnating the porous material with the aqueous solution such that it penetrates the accessible pore space of the material;
- drying the impregnated material; and
- carrying out heat treatment to form an internal coating which protects against oxidation, constituted by said modified phosphate glass-containing base,
characterised in that:
- the precursors are introduced into the aqueous solution so as to allow the formation of a glass-containing base in which the molar ratio between the glass modifying oxides, comprising zinc oxide, and the glass forming oxides, principally or solely comprising phosphoric anhydride, is at least equal to 0.6 to confer a resistance to corrosion by moisture on the glass-containing phosphate base, and
- the solution is formed by firstly dissolving in water, a polyphosphate which can then allow the required quantity of precursor salts of the modifying oxides comprising at least one zinc salt to dissolve to form a stable solution without the formation of a precipitate.

2. A process according to claim 1, characterised in that the precursors are introduced into the aqueous solution so as to allow the formation of a glass-containing phosphate base in which the molar ratio between the modifying oxides and the forming oxides is at least 0.9.

3. A process according to claim 1 or claim 2, characterised in that the first polyphosphate to be dissolved is a polyphosphate selected from sodium metaphosphate and sodium trimetaphosphate.

4. A process according to any one of claims 1 to 3, characterised in that the zinc salt is introduced second into the aqueous solution.

5. A process according to any one of claims 1 to 4, characterised in that the zinc salt introduced into the aqueous solution is at least one of the salts constituted by zinc nitrate and zinc sulfate.

6. A process according to any one of claims 1 to 3, characterised in that the proportion of precursors in the solution is greater than or equal to 50% by weight.

7. A process according to any one of claims 1 to 6, characterised in that the viscosity of the aqueous solution is in the range 0.1 dPa.s to 10 dPa.s.

8. A process according to any one of claims 1 to 7, characterised in that the solution is acidic.

9. A process according to claim 8, characterised in that the solution has a pH of less than 0.5.

10. A process according to claim 8 or claim 9, characterised in that the acidity is controlled by addition of oxide precursors.

11. A process according to any one of claims 1 to 10, characterised in that at least one precursor salt of a metallic oxide is introduced into the solution, which metallic oxide is selected from copper, cobalt, nickel, iron, magnesium and lead oxides.

12. A process according to claim 11, characterised in that copper sulfate is introduced into the solution as a precursor of copper oxide.

13. A process according to any one of claims 1 to 12, characterised in that at least one precursor of lithium oxide and of potassium oxide is introduced into the solution.

14. A process according to any one of claims 1 to 12, characterised in that at least one precursor of bismuth oxide, of aluminium oxide and of boron oxide is introduced into the solution.

15. A process according to any one of claims 1 to 14, characterised in that at least one precursor of vanadium oxide and of titanium oxide is introduced into the solution.

16. A process according to any one of claims 1 to 15, characterised in that at least one organic stabilizing agent with a fugitive nature is added to the solution of precursors.

17. A process according to claim 16, characterised in that the fugitive stabilizing agent is selected from oxalic, tartaric and citric acids.

18. A process according to any one of claims 1 to 17, characterised in that a phosphoric anhydride precursor is introduced into the solution, with the exception of phosphoric acid.

19. A process according to claim 18, characterised in that the phosphoric anhydride precursor is ammonium phosphate.

20. A process according to any one of claims 1 to 19, characterised in that the heat treatment is carried out in a nitriding atmosphere.

21. A process according to any one of claims 1 to 20, characterised in that it further comprises the formation of an external protective coating against oxidation fixed in the surface pore space of the material.

22. A process according to claim 21, characterised in that the formation of the external coating comprises depositing a composition containing precursors for the external coating on the surface of the material.

23. A process according to claim 22, characterised in that the composition containing the precursors for the external protection is formed from the aqueous solution containing the precursors for the internal protection.

24. A process according to claim 23, characterised in that the composition containing the precursors for the external protection further comprises colloidal silica.

25. A porous carbon-containing material provided with an internal oxidation protection and active oxidation of carbon, the internal protection being constituted by a layer fixed in the accessible open pore space of the material and formed by a glass-containing phosphate base modified at least by the presence of zinc oxide,
characterised in that the glass-containing base has the following composition, in mole percentages of oxides:
20% to 60% of P₂O₅;
10% to 30% of ZnO;
10% to 30% of Na₂O;
0 to 20% of at least one oxide selected from CuO, CoO, NiO, FeO, MgO and PbO;
0 to 15% of at least one alkali metal oxide selected from Li₂O and K₂O;
0 to 20% of at least one oxide selected from Bi₂O₃, Al₂O₃ and B₂O₃; and
0 to 5% of at least one oxide selected from V₂O₅ and TiO₂,
with a molar ratio between the modifying oxides, comprising zinc oxide, and the forming oxides, principally or solely comprising phosphoric anhydride, which is at least equal to 0.6 to confer a resistance to corrosion by moisture on the glass-containing phosphate base.

26. A material according to claim 25, characterised in that the composition of the glass-containing base, as a mole percentage of oxides, is as follows:
20% to 50% of P₂O₅;
10% to 30% of ZnO;
10% to 30% of Na₂O;
0 to 20% of at least one oxide selected from CuO, CoO, NiO, FeO, MgO and PbO;
0 to 15% of at least one alkali metal oxide selected from Li₂O and K₂O;
0 to 15% of at least one oxide selected from Bi₂O₃, Al₂O₃ and B₂O₃; and
0 to 5% of at least one oxide selected from V₂O₅ and TiO₂.

27. A material according to claim 25 or claim 26, characterised in that said molar ratio is at least equal to 0.9.
